Europäisches Patentamt

European Patent Office

Office européen des brevets

(11) Publication number: **0 160 671**
**B1**

(12) **EUROPEAN PATENT SPECIFICATION**

(45) Date of publication of patent specification: **07.02.90**

(21) Application number: **84903870.8**

(22) Date of filing: **17.10.84**

(86) International application number:
**PCT/US84/01666**

(87) International publication number:
**WO 85/01784 25.04.85 Gazette 85/10**

(51) Int. Cl.⁵: **F 16 H 37/00, F 16 H 37/06, F 16 H 1/38, B 62 D 11/00, G 01 N 3/08**

(54) **NO-SLIP, IMPOSED DIFFERENTIAL.**

(30) Priority: **21.10.83 US 544390**

(43) Date of publication of application:
**13.11.85 Bulletin 85/46**

(45) Publication of the grant of the patent:
**07.02.90 Bulletin 90/06**

(84) Designated Contracting States:
**DE FR GB SE**

(56) References cited:
**FR-A- 781 404**
**GB-A- 539 079**
**GB-A- 707 655**
**IT-A- 323 334**
**US-A-2 542 157**
**US-A-2 730 182**
**US-A-2 763 164**
**US-A-4 016 754**

(73) Proprietor: **GLEASMAN, Vernon E.**
**11 Pondview Drive**
**Pittsford, NY 14534 (US)**
(73) Proprietor: **GLEASMAN, Keith E.**
**11 McCord Woods Drive**
**Fairport, NY 14450 (US)**
(73) Proprietor: **GLEASMAN, James Y.**
**1701 Laguna Loma Cove**
**Austin, TX 78746 (US)**

(72) Inventor: **GLEASMAN, Vernon E.**
**11 Pondview Drive**
**Pittsford, NY 14534 (US)**
Inventor: **GLEASMAN, Keith E.**
**11 McCord Woods Drive**
**Fairport, NY 14450 (US)**
Inventor: **GLEASMAN, James Y.**
**1701 Laguna Loma Cove**
**Austin, TX 78746 (US)**

(74) Representative: **Spott, Gottfried, Dr. et al**
**Sendlinger-Tor-Platz 11**
**D-8000 München 2 (DE)**

EP 0 160 671 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention refers to a no-slip steer and drive system for a vehicle as set forth in the preamble of claim 1. A system of this kind is known from US—A—2 763 164.

In the known system, one of the half-shafts of the control differential is drivingly engaged via a self-locking worm wheel and gear arrangement by a control motor, whereas the other half-shaft of said differential is drivingly connected to one axle shaft of the vehicle via a sprocket and chain arrangement. The other axle shaft of the vehicle is drivingly connected to the casing of the control differential via another sprocket and chain arrangement having a transmission ratio of 1:2. Thus, upon straight forward movement of the vehicle, the first-mentioned half-shaft of the control differential being at standstill, the other half-shaft is entrained by its associated axle shaft whereas the casing of the control differential is entrained by the other axle shaft at half of the rotational speed of the other half-shaft. When a turning movement of the vehicle is required, the control motor is energized so as to impart a rotational movement to the associated half-shaft of the control differential. Thereby an additive driving force is imparted to one of the axle shafts, whereas a substractive driving force is imparted on the other axle shaft.

US—A—2 730 182 discloses a control differential transmission gearing serving the same purpose as explained before and comprising a drive differential driven by a main engine and a variable speed control comprising a control differential for selectively imparting additive and substractive driving force to the output axles of said main differential in order to control relative speed thereof and, thus, control the direction of movement of the vehicle.

The control differential comprises concentric gears operatively connected with said output axles and normally rotatable by said axles in opposite directions with respect to each other, a cage rotatably mounted concentric with said gears, a pair of orbiting idler gears carried by said cage on parallel axes spaced from the common axis of said cage and said first-named gears, said idler gears having teeth meshed with each other on substantially uniform pitch diameters, said cage being selectively driven by said control motor for controlling the relative speed of said output axles. Hence, the control differential is of rather complicated design. The differential gears are subject to full drive torque and must be ruggedly built and must have heavy thrust bearings holding the bevel gears comprised therein in mesh and would become unpractically large and expensive, if built to de the job reliably.

From FR—A—781 404 a steer and drive system for a vehicle is known having a single engine to perform straight driving and steering of the vehicle. The system comprises a drive differential directly driven by the engine and connected to the drive axles of the vehicle, and a control differential the output shafts of which are additively and subtractively connected to the respective drive axles. The control differential is driven by the engine in either driving directions via an engageable and disengageable clutch and gear device including two selectively engageable cluctches and a reversing gear arrangement. Hence, the speed of rotation of the steering torque is subject to the speed of the engine. When moving the vehicle on a straight path the control differential is unclutched and free to rotate. Thus, there is no positive control for said straight ahead movement. A no-slip function is missing as well.

It is the object of the invention to provide a system as set forth in the preamble of claim 1 which is of simple design, may have reduced weigth and provides no-slip function and good steerability of the vehicle.

This object is attained by the characterizing features of claim 1. A wheel dynamometer for testing a drive train is defined by the features of claim 2. Preferred embodiments thereof are subject matter of the dependent claims.

By the invention, the control differential is provided with control shafts which are different of the shaft axles of the vehicle. In normal, i.e. straight ahead running condition of the vehicle, the casing of the control differential is locked so that the control differential exhibits a no-slip function.

Figure 1 is a partially schematic view of a preferred embodiment of a no-slip, imposed differential according to our invention;

Figure 2 is a partially schematic view of our imposed differential applied to a wheel dynamometer; and

Figure 3 is a schematic view of a vehicle pivot turn made possible by our imposed differential.

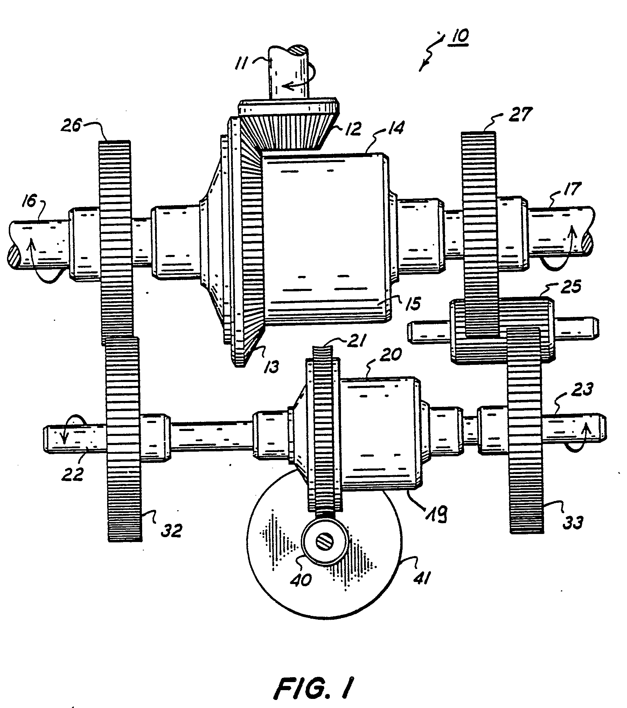

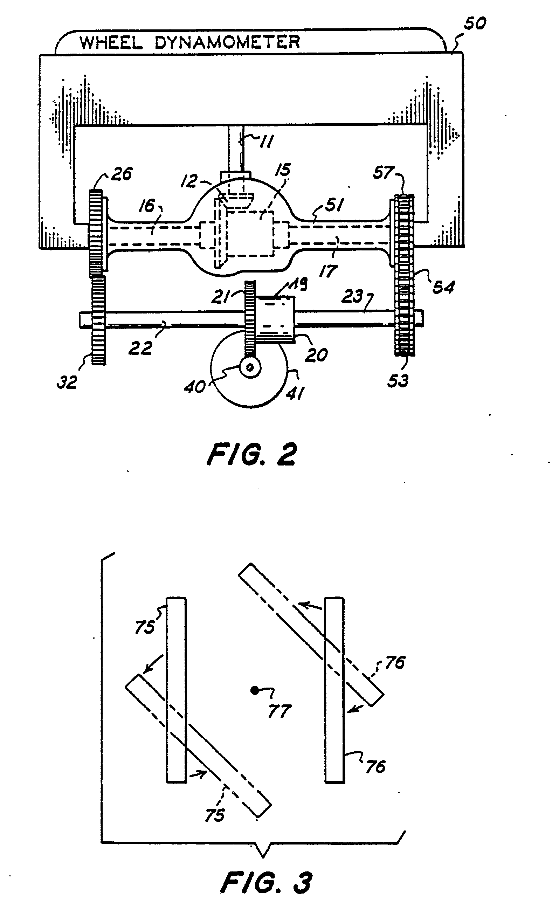

An explanation of the operation and advantages of our invention follows a description of the basic preferred structure or configuration of our no-slip, imposed differential as best shown in Figs. 1 and 2.

As applied to a vehicle as shown in Fig. 1, engine power input via shaft 11 turning gear 12 rotates ring gear 13 and case 14 of a conventional, unlimited slip differential 15 connected for driving a pair of axle shafts 16 and 17 on opposite sides of the vehicle. Differential 15 is generally known and well understood in the power transmission art and is suitably sized to the vehicle being driven. This can range from small garden tractors and tillers up to large tractors and earth movers. Differential 15 is preferably a bevel gear differential lacking any limited slip devices so as not to impair differential rotation of axle shafts 16 and 17.

A second differential 20, also of a conventional unlimited slip design and comprising a casing 19, is connected between a pair of control shafts 22 and 23 that are interconnected in a driving relationship with axle shafts 16 and 17. One control shaft 23 and one axle shaft 17 are connected for rotation in the same direction, and another control shaft 22 and another axle shaft 16 are connected for rotation in opposite directions. This causes counter or differential rotation of control shafts 22 and 23 as axle shafts 16 and 17 rotate in the same direction and conversely causes differential rotation of axle shafts 16 and 17 as control shafts 22 and 23 rotate in the same direction.

Gear connections between control shafts and axle shafts as shown in Fig. 1 are preferred for larger and more powerful vehicles. These include axle shaft gears 26 and 27 fixed respectively to axle shafts 16 and 17 and control shaft gears 32 and 33 fixed respectively to control shafts 22 and 23. Meshing axle shaft gear 26 with control shaft gear 32 provides opposite rotation between axle shaft 16 and control shaft 22, and meshing both axle shaft gear 27 and control shaft gear 33 with idler gear 25 provides same direction rotation for axle shaft 17 and control shaft 23.

Gear connections between control shafts and axle shafts are preferably incorporated into an enlarged housing containing both axle differential 15 and control differential 20. For a reason explained below, control differential 20 can be sized to bear half the force borne by axle differential 15 so that the complete assembly can be fitted within a differential housing that is not unduly large.

Smaller or less powerful vehicles can use shaft interconnections such as belts or chains in place of gearing. Also, shaft interconnections need not be limited to the region of the axle differential and can be made toward the outer ends of the axle shafts.

A gear or drive ratio between control shafts and axle shafts is preferably 1:1. This ratio can vary, however, so long as it is the same on opposite sides of the axle and control differentials.

An input control gear 40 meshes with a ring gear 21 of control differential 20 for imposing differential rotation on the system. Gear 40 is preferably a worm gear, and ring gear 21 is preferably a worm wheel so that ring gear 21 turns only when gear 40 turns.

Gear 40 can be turned by several mechanisms, depending on the objective. For steering purposes, gear 40 can be turned by a steering shaft joined to control gear 40 and manually turned by a driver. Steering mechanisms can also use motors for turning gear 40. Alternatives include a DC starter motor 41 electrically turned via a rheostat in a steering system and a hydraulic or pneumatic motor turned by a vehicle's hydraulic or pneumatic system in response to a steering control.

Our invention can also be applied to a wheel dynamometer 50 as schematically shown in Fig. 2. For such purpose, the drive axle 51 being tested by the dynamometer provides axle shafts 16 and 17 and axle differential 15, which need not be an unlimited slip differential and can be a no-slip differential such as disclosed in U.S. Patent No. 2,859,641. Power applied via input shaft 11 turns axle shafts 16 and 17, which can be subjected to varying loads by wheel dynamometer 50.

Previous wheel dynamometers have caused differential rotation of axle shafts 16 and 17 by subjecting them to different loads. This will not work with the differential of U.S. Patent No. 2,859,641, which applies more power to the more heavily loaded axle shaft.

Our invention can apply differential rotation directly and realistically to axle shafts 16 and 17 via control differential 20 and its control shafts 22 and 23. These are connected to axle shafts 16 and 17 for same and opposite direction rotation as explained above; and when turned by control gear 40 rotated by motor 41, control shafts 22 and 23 impose differential rotation on axle shafts 16 and 17.

Several drive interconnections are possible between the control shafts and the axle shafts of the test axle mounted on wheel dynamometer 50. One preferred arrangement shown in Fig. 2 uses meshed gears 26 and 32 fixed respectively to test axle shaft 16 and control shaft 22 for opposite direction rotation. Sprockets 57 and 53, coupled by a chain 54 and fixed respectively to test axle shaft 57 and control shaft 23, provide same direction rotation. Belts and other gearing arrangements are also possible.

Operation

Two important effects occur from the interconnection of control differential 20 and its control shafts 22 and 23 with axle differential 15 and axle shafts 16 and 17. One is a no-slip drive that prevents wheels or tracks from slipping unless slippage occurs on both sides of the vehicle at once. The other effect is imposed differential rotation that can accomplish steering to pivot or turn a vehicle.

The no-slip drive occurs because axle shafts 16 and 17 are geared together via differential 20. Power applied to an axle shaft on a side of the vehicle that has lost traction is transmitted to the connecting control shaft on that side, through differential 20 to the opposite control shaft, and back to the opposite axle shaft where it is added to the side having traction. So if one axle shaft loses traction, the opposite axle shaft drives harder; and the only way slippage can occur is if both axle shafts lose traction simultaneously.

To elaborate on this, consider a vehicle rolling straight ahead with its axle shafts 16 and 17 turning uniformly in the same direction. Control gear 40 is stationary for straight ahead motion; and since control gear 40 is preferably a worm gear, worm wheel 21 of control differential 20 cannot turn. Control shafts 22 and 23, by their driving connections with the axle shafts, rotate differentially in opposite directions, which control differential 20 accommodates.

Axle differential 15 equally divides the power input from shaft 11 and applies one-half of the input power to each axle shaft 16 and 17. If the track or wheel being driven by axle shaft 16 loses traction, it cannot apply the power available on shaft 16 and tends to slip. Actual slippage cannot occur, however, because axle shaft 16 is geared to control shaft 22. So if a wheel or track without traction cannot apply the power on shaft 16, this is transmitted to control shaft 22, which rotates in an opposite direction from axle shaft 16. Since ring gear 21 cannot turn, rotational power on control shaft 22 is transmitted through differential 20 to produce opposite rotation of control shaft 23. This is geared to axle shaft 17 via idler gear 25 so that power on control shaft 23 is applied to axle shaft 17 to urge shaft 17 in a forward direction driving the wheel or track that has traction and can accept the available power. Since only one-half of the full available power can be transmitted from one axle shaft to another via differential 20 and its control shafts, these can be sized to bear one-half the force borne by axle differential 15 and its axle shafts.

Of course, unusable power available on axle shaft 17 because of a loss of traction on that side of the vehicle is transmitted through the same control shaft and control differential route to opposite axle shaft 16. This arrangement applies the most power to the wheel or track having the best traction, which is ideal for advancing the vehicle. The wheel or track that has lost traction will maintain rolling engagement with the ground while the other wheel or track drives. The only time wheels or tracks can slip is when they both lose traction simultaneously.

To impose differential rotation on axle shafts 16 and 17 for pivoting or turning the vehicle, it is only necessary to rotate control gear 40. This differentially rotates axle shafts to turn or pivot the vehicle because of the different distances traveled by the differentially rotating wheels or tracks on opposite sides of the vehicle. Steering controlled by rotating gear 40 can be applied to track-laying vehicles and wheeled vehicles that steer without using turning wheels. It can also be used for differntially rotating drive wheels or tracks to provide power-assisted steering for a vehicle that also has turning wheels.

Whenever control gear 40 turns, it rotates ring gear 21, which turns the casing 19 of differential 20 to rotate control shafts 22 and 23 in the same direction. The connection of control shafts 22 and 23 with axle shafts 16 and 17 converts the same direction rotation of control shafts 22 and 23 to opposite differential rotation of axle shafts 16 and 17, as accommodated by axle differential 15. This drives wheels or tracks forward on one side of the vehicle and rearward on the other side of the vehicle, depending on the direction of rotation of control gear 40.

Such differential rotation is added to whatever forward or rearward rotation of the axle shafts is occurring at the time. So if a vehicle is moving forward or backward when control gear 40 turns, the differential rotation advances and retards opposite axle shafts and makes the vehicle turn.

If a vehicle is not otherwise moving when control gear 40 turns, wheels or tracks go forward on one side and backward on the other side so that the vehicle pivots on a central point. This is schematically illustrated in Fig. 3 for a vehicle having a pair of tracks 75 and 76. Both tracks can have a rolling engagement with the ground as the vehicle rotates around a center point 77 by driving right track 76 forward and left track 75 rearward. The tracks experience some heel and toe scuffing, but this is less stress than if one track were braked still and the other driven. The pivot turn also spins the vehicle on one point 77, without requiring motion in any direction as must occur when one track is braked and another is driven.

Pivot turns can also be made with wheeled vehicles, such as tractors, loaders, forklifts, etc. Many of these now have turning wheels that could advantageously be replaced by non-turning wheels steered by imposed differential rotation according to our invention. To accommodate such vehicles, our invention can be applied to more than one drive axle powering more than one pair of drive wheels. Evidence indicates that pivot-turning capability can save considerable time for loaders, tractors, and forklifts compared to turning patterns requiring forward and rearward motion.

## Claims

1. A no-slip steer and drive system for a vehicle having a main propulsion engine (connected to 11) providing torque to a drive differential (15) connected between drive axles (16, 17) turning drive elements on opposite sides of the vehicle and having a separate steering control differential (20) of conventional design connected additively and substractively with said drive axles (16, 17), respectively, said system comprising a reversible control motor (41) that is rotationally independent of said main propulsion engine for inputting steering control to said steering control differential (20) via a self-locking worm gear and wheel arrangement (40, 21), said steering control differential (20) having output elements operatively connected to said drive axles (16, 17), said steering control differential (20) being connected between two control elements (22, 23) respectively connected additively and subtractively with said drive axles (16, 17), one member (19) of said control differential being drivingly connected to said control motor (41) via said worm gear and wheel arrangement (40, 21) so as to enable said one member (19) to be rotated by said control motor (41), the control elements (22, 23) each having a gear element (32, 33) affixed thereto, each of said gear elements (32, 33) being drivingly coupled to a corresponding one of said drive axles, characterized in that said two control elements are half-shafts (22, 23) each connected to a corresponding side gear of said control differential (20), wherein the one half-shaft (22) has a gear (32) meshing a gear (26) affixed to one drive axle (16) whereas the other half-shaft (23) is drivingly connected to the other drive axle (17) either via a gear arrangement (33, 25, 27) including an idler gear (25) or via a sprocket and chain arrangement (53, 57, 54).

2. A wheel dynamometer for testing a drive train that includes a pair of differentially driven axles (16, 17) subjected to variable loads, said dynamometer comprising:

a. a pair of control shafts (22, 23);

b. a control differential (20) arranged for receiving and dividing control torque between said pair of control shafts (22, 23);

c. means (53, 54, 57) for connecting one control shaft (23) to one axle (17) for rotation in the same direction; and

d. means (32, 26) for connecting the other control shaft (22) to the other axle (16) for rotation in opposite directions.

3. The wheel dynamometer of claim 2 wherein a ring gear of said control differential (20) is formed as a worm wheel (21) and a worm gear (40) meshed with said worm wheel (21) inputs said control torque to said control differential (20).

4. The wheel dynamometer of claim 2 or 3 wherein drive ratios between each of said connected control and axle shafts are equal.

## Patentansprüche

1. Schlupffreies Steuer-und Antriebssystem für ein Fahrzeug mit einer Fahrantriebs-Hauptmaschine (verbunden mit 11), die einDrehmoment an ein Antriebsdifferentialgetriebe (15) liefert, das zwischen die Antiebsachsen (16, 17) geschaltet ist, die Antriebselemente auf entgegengesetzten Seiten des Fahrzeugs drehen, und einem getrennten Lenksteuerdifferentialgetriebe (20) bekannter Bauart, das additiv bzw. subtraktiv mit den Antriebsachsen (16, 17) verbunden ist, und das einen reversiblen Steuermotor (41) aufweist, der drehantriebsmäßig unabhängig von der Fahrantriebs-Hauptmaschine ist, um dem Lenksteuerdifferentialgetriebe (20) über eine selbstsperrende Schnecken-und Scheckenradanordnung (40, 21) eine Lenksteuerung einzugeben, wobei das Lenksteuerdifferentialgetriebe Ausgangselemente aufweist, die wirkungsmäßig mit den Antriebsachsen (16, 17) verbunden sind, das Lenksteuerdifferentialgetriebe (20) zwischen zwei Steuerelemente (22, 23) geschaltet ist, die additiv bzw. subtraktiv mit den Antriebsachsen (16, 17) verbunden sind, ein Glied (19) des Lenksteuerdifferentialgetriebes antriebsmäßig mit dem Steuermotor (41) über die Schnecken-und Schneckenradanordnung (40, 21) verbunden ist, damit das genannte eine Glied (19) von dem Steuermotor (41) gedreht werden kann, jeweils ein Zahnradelement (32, 33) an den Steuerelementen (22, 23) befestigt ist und jedes Zahnradelement (32, 33) antriebsmäßig mit einer zugehörigen der Antriebsachsen gekoppelt ist, dadurch gekennzeichnet daß die zwei Steuerelemente Halbwellen (22, 23) sind, die jeweils mit einem zugehörigen Seitenrad des Lenksteuerdifferentialgetriebes (20) verbunden sind, wobei die eine Halbwelle (22) ein Zahnrad (32) aufweist, das mit einem Zahnrad (26) kämmt, das an der einen Antriebsachse (16) befestigt ist, während die andere Halbwelle (23) antriebsmäßig mit der anderen Antriebsachse (17) entweder über eine ein Leerlaufrad (25) aufweisende Zahnradanordnung (35, 25, 27) oder über eine Kettenritzel-und Kettenanordnung (53, 57, 54) verbunden ist.

2. Raddynamometer zum Testen eines Antriebszuges, der ein Paar differentiell getriebener Achsen (16, 17) aufweist, die variablen Belastungen ausgesetzt sind, enthaltend:

a. ein Paar Steuerwellen (22, 23);

b. ein Steuerdifferentialgetriebe (20), das dazu eingerichtet ist, ein Drehmoment entgegenzunehmen und auf das genannte Paar Steuerwellen (22, 23) zu verteilen;

c. eine Einrichtung (53, 54, 57) zum Verbinden der einen Steuerwelle (23) mit der einen Achse (17) zu Drehung in übereinstimmenden Richtungen; und

d. eine Einrichtung (32, 26) zum Verbinden der anderen Steuerwelle (22) mit der anderen Achse (16) zur Drehung in einander entgegengesetzten Richtungen.

3. Raddynamometer nach Anspruch 2, bei dem ein Ringrad des Steuerdifferentialgetriebes (20) als eine Schneckenrad (21) ausgebildet ist und eine Schnecke (40), die mit dem Schneckenrad (21) kämmt, dem Steuerdiffierentialgetiebe (20) das Steuerdrehmoment zuführt.

4. Raddynamometer nach Anspruch 2 oder 3, bei dem die Antriebsübersetzungsverhältnisse zwischen jedem der miteinander verbundenen Steuer-und Achswellen einander gleich sind.

## Revendications

1. Système de commande de direction et d'entraînement sand glissement pour un véhicule comportant un moteur de propulsion principal (relié à 11) fournissant un couple à un différentiel d'entraînement (15) relié entre des essieux moteurs (16, 17) faisant tourner des organes d'entraînement situés sur les côtes opposés du véhicule, et comportant un différentiel de commande (20) de direction séparé, de construction classique, relié respectivement additivement et soustractivement auxdits essieux (16, 17), ledit système comprenant un moteur (41) de commande réversible qui est indépendant en rotation dudit moteur de propulsion principal pour appliquer la commande de direction sur ledit différentiel (20) de commande de direction par l'intermédiaire d'une combinaison autobloquante (40, 21) à vis sans fin et roue tangente, ledit différentiel (20) de commande de direction comportant des organes de sortie fonctionnellement reliés auxdites essieux moteurs (16, 17), ledit différentiel (20) de commande de direction étant relié entre deux organes (22, 23) de commande respectivement reliés additivement et soustractivement auxdits essieux moteurs (16, 17), un organe (19) dudit différentiel de commande étant relié pour entraînement audit moteur (41) de commande par l'intermédiaire de ladite combinaison (40, 21) à vis sans fin et roue tangente, de manière à permettre de faire tourner ledit organe (19) sous l'action dudit moteur (41) de commande, chacun desdits organes (22, 23) de commande étant associé à un organe d'engrenage (32, 33), chacun desdits organes (32, 33) d'engrenage étant accouplé pour entraînement à un essieu moteur correspondant, caractérisé en ce que les deux dits organes de commande sont des demi-arbres (22, 23) dont chacun est relié à un engrenage, du côté correspondant, dudit différentiel (20) de commande, avec un demi-arbre (22) comportant un engrenage (32) en prise avec un engrenage (26) fixé sur un essieu d'entraînement (16) tandis que l'autre demi-arbre (23) est relié pour entraînement à l'autre essieu moteur (17), soit par l'intermédiaire d'un système d'engrenage (33, 25, 27) incluant un engrenage fou (25), soit par l'intermédiaire d'une combinaison (53, 57, 54) à roue à chaîne et non dentée.

2. Dynamomètre de roues pour contrôler un système d'entraînement incluant une paire d'essieux (16, 17) entraînés de façon différentielle et supportant des charges variables, ledit dynamomètre comprenant:

a. une paire d'arbres (22, 23) de commande;

b. un différentiel (20) de commande, adapté à recevoir et à partager un couple de commande entre les arbres de ladite paire d'arbres (22, 23) de commande;

c. des moyens (53, 54, 57) pour relier un arbre (23) de commande à un essieu (17) pour rotation dans le même sens; et

d. des moyens (32, 26) pour relier l'autre arbre de commande (22) à l'autre essieu (22) pour rotation en sens opposé.

3. Dynamomètre selon la revendication 2, dans lequel un engrenage annulaire dudit différentiel (20) de commande, que est constitué sous la forme d'une roue tangente (21) et d'une vis sans fin (40) en prise avec ladite roue tangente (21), applique ledit couple de commande audit différentiel (20) de commande.

4. Dynamomètre à roues selon la revendication 2 ou 3, dans lequel les rapports d'entraînement entre chacun desdits arbres de commande et d'essieu sont égaux.

FIG. 1

**FIG. 2**

**FIG. 3**